(19) Europäisches Patentamt / European Patent Office / Office européen des brevets

(11) **EP 2 709 821 B1**

## (12) FASCICULE DE BREVET EUROPEEN

(45) Date de publication et mention
de la délivrance du brevet:
**04.09.2019 Bulletin 2019/36**

(21) Numéro de dépôt: **12728688.8**

(22) Date de dépôt: **15.05.2012**

(51) Int Cl.:
**B29C 49/56** *(2006.01)*    **B29C 49/78** *(2006.01)*
**B29C 49/12** *(2006.01)*    **B29C 49/18** *(2006.01)*
B29C 49/42 *(2006.01)*    B29C 49/48 *(2006.01)*

(86) Numéro de dépôt international:
**PCT/FR2012/051079**

(87) Numéro de publication internationale:
**WO 2012/156638 (22.11.2012 Gazette 2012/47)**

(54) **PROCEDE DE FABRICATION DE RECIPIENTS, COMPRENANT UNE OPERATION ANTICIPEE DE BOXAGE**

VERFAHREN ZUR HERSTELLUNG VON BEHÄLTERN EINSCHLIESSLICH EINER GEPLANTEN VERSCHACHTELUNGSOPERATION

METHOD FOR MANUFACTURING CONTAINERS, INCLUDING AN ANTICIPATED BOXING OPERATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.05.2011 FR 1154353**

(43) Date de publication de la demande:
**26.03.2014 Bulletin 2014/13**

(73) Titulaire: **Sidel Participations
76930 Octeville-sur-Mer (FR)**

(72) Inventeurs:
• **DEAU, Thierry
F-76930 Octeville sur Mer (FR)**
• **DERRIEN, Mikael
F-76930 Octeville sur Mer (FR)**
• **PROTAIS, Pierrick
F-76930 Octeville sur Mer (FR)**
• **SANTAIS, Franck
F-76930 Octeville sur Mer (FR)**

(74) Mandataire: **Siloret, Patrick et al
Sidel Participations
Avenue de la Patrouille de France
CS60627 Octeville-sur-mer
76059 Le Havre Cedex (FR)**

(56) Documents cités:
**EP-A1- 0 559 103     WO-A1-99/52701
US-A- 5 785 921**

**Description**

L'invention a trait à la fabrication des récipients par soufflage d'ébauches en matière plastique tel que polyéthylène téréphtalate (PET).

Une technique classique de fabrication de récipients est le soufflage (éventuellement doublé d'un étirage). Cette technique consiste à introduire l'ébauche (i.e. une préforme ou un récipient intermédiaire ayant subi une opération de préformage), préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression, pour plaquer la matière contre la paroi du moule.

Pour certaines applications, il est nécessaire de former sur le récipient des réserves en creux, notamment dans un but esthétique (par ex. création de galbes), fonctionnel (réalisation d'une poignée de préhension du récipient) ou structurel (par ex. réalisation de panneaux latéraux ou d'un fond surétiré, destinés à absorber la déformation du récipient lors d'un remplissage à chaud).

Lorsqu'une telle réserve atteint une certaine profondeur, le récipient ne peut être soufflé dans un moule ordinaire car, malgré la pression de soufflage élevée (généralement supérieure à 30 bars), celle-ci est insuffisante pour parfaitement appliquer la matière contre le relief du moule destiné à former la réserve, surtout dans les zones tournées à l'opposé du col du récipient à partir duquel se développe la bulle de soufflage.

Aussi, on a habituellement recours à des moules munis d'inserts mobiles initialement escamotés dans la paroi du moule et déployés en cours de soufflage pour venir repousser la paroi du récipient, comme cela est illustré dans la demande de brevet européen EP 1 922 256 ou la demande de brevet américain correspondante US 2009/139996 (Sidel), ou encore le brevet américain US 5785921 (Sidel).

Cette technique, couramment appelée « boxage », est notamment utilisée pour le formage de récipients munis d'une poignée intégrée, ou d'un fond surétiré destiné à absorber la déformation du récipient lors d'un remplissage à chaud, cf. la demande de brevet européen EP 2 173 637 (Sidel).

La technique du boxage est complexe car, suivant la forme et la profondeur des réserves à réaliser, le repoussage opéré par l'insert peut conduire à un amincissement de la matière, voire à une rupture locale de la paroi du récipient, qui rend celui-ci inexploitable. C'est pourquoi le réglage des machines dédiées au boxage est délicat ; il est généralement confié à des opérateurs expérimentés dont le tour de main permet de réaliser au jugé des récipients conformes. Mais il est usuel que les paramètres de réglage (pression et débit de soufflage, vitesse de déplacement de l'insert, etc.), initialement corrects, subissent au cours de la fabrication des dérives incontrôlées qui affectent la qualité des récipients. Les opérateurs expérimentés n'étant pas toujours disponibles pour corriger les réglages, il est parfois nécessaire de stopper la ligne de production, pour éviter l'accumulation de récipients non conformes.

Le document WO 99/52701 A1 propose un procédé de fabrication d'un récipient à partir d'une ébauche en matière plastique, au sein d'un moule muni d'une paroi définissant une cavité à l'empreinte du récipient, et d'un fond de moule mobile par rapport à la paroi entre une position rétractée dans laquelle il s'étend en retrait par rapport à la cavité, et une position déployée dans laquelle il s'étend en saillie vers l'intérieur de la cavité pour former dans le récipient une réserve en creux, qui comprend :

- une opération d'introduction de l'ébauche dans le moule ;
- une opération de présoufflage, consistant à injecter dans l'ébauche un fluide sous pression à une pression dite de présoufflage ;
- une opération de soufflage, consécutive à l'opération de présoufflage, consistant, à injecter dans l'ébauche un fluide sous pression à une pression dite de soufflage, supérieure à la pression de présoufflage ;
- et, finalement, une opération de boxage, consistant à déplacer le fond de moule mobile de sa position rétractée à sa position déployée, qui est initiée avant l'opération de soufflage.

Les récipients formés par ce procédé présentent de manière fiable et récurrente une forme acceptable et de bonnes performances mécaniques. Dans la mesure où il est possible de régler les paramètres machine pour initier le boxage avant le soufflage, l'automatisation du procédé est ainsi favorisée.

L'invention a pour objet de perfectionner ce procédé, notamment pour en faciliter l'automatisation.

L'invention est définie par les caractéristiques de la revendication 1.

Selon d'autres caractéristiques prises seules ou en combinaison :

- une commande d'ouverture d'une électrovanne de boxage étant donnée à un instant tB1 et une commande d'ouverture d'une électrovanne de soufflage à un instant tS1, l'intervalle $\Delta t$ entre les instants tB1 et tS1 est de préférence choisi pour qu'un intervalle t1 entre un instant de début réel du déplacement du fond de moule et un instant réel de début du soufflage soit tel que t1 > 0,
où :

$$t1 = \Delta t - \Delta t_B + \Delta t_S$$

$\Delta t_B$ est le temps de réponse de l'électrovanne

de boxage ;

$\Delta t_S$ est le temps de réponse de l'électrovanne de soufflage.

- de préférence, l'intervalle t1 est choisi pour que t1/t2 soit compris entre 0,05 et 0,5, où t2 est une durée de montée en pression de l'ébauche après le début réel du soufflage, à l'issue de laquelle la pression demeure sensiblement égale à la pression de soufflage ;
- la vitesse de déplacement du fond de moule est réglée pendant l'intervalle t1 pour que d1/C soit compris entre 0,05 et 0,5, où d1 est la distance parcourue par le fond de moule pendant l'intervalle t1 et C la course du fond de moule, séparant sa position basse de sa position haute ;
- l'opération de boxage est achevée après une durée t3 prédéterminée, suivant la fin de la montée en pression de l'ébauche ;
- la vitesse de déplacement du fond de moule est réglée pendant l'intervalle t3 pour que d3/C soit compris entre 0,05 et 0,6, où d3 est la distance parcourue par le fond de moule pendant l'intervalle t3 et C la course du fond de moule, séparant sa position basse de sa position haute.

D'autres objets et avantages de l'invention apparaîtront à la lumière de la description faite ci-après en référence aux dessins annexés dans lesquels :

- la figure 1 est une vue en coupe, montrant un moule dans lequel a lieu le formage d'un récipient, montré à l'instant du début d'une opération de présoufflage ;
- la figure 2 est une vue similaire à la figure 1, à la fin de l'opération de présoufflage ;
- la figure 3 est une vue similaire à la figure 1, à la fin de l'opération de boxage ;
- la figure 4 est un diagramme sur lequel sont tracés parallèlement :

    - la courbe de pression régnant dans le récipient,
    - la position du fond de moule,
    - les chronogrammes de commande des opérations de présoufflage, soufflage et boxage.

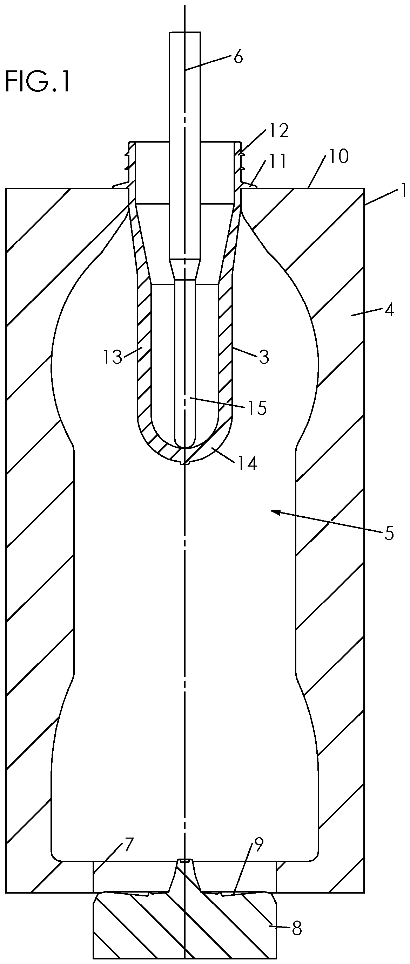

Sur les figures 1 à 3 on a représenté un moule 1 pour la fabrication d'un récipient 2 par étirage soufflage à partir d'une ébauche 3 (en pratique, il s'agit généralement d'une préforme, obtenue par injection) en matière plastique.

Ce moule 1 comprend une paroi 4 définissant une cavité 5 interne répartie autour d'un axe 6 principal du moule 1 qui, lorsque les récipients 2 à former sont symétriques de révolution, forme un axe de symétrie du moule 1.

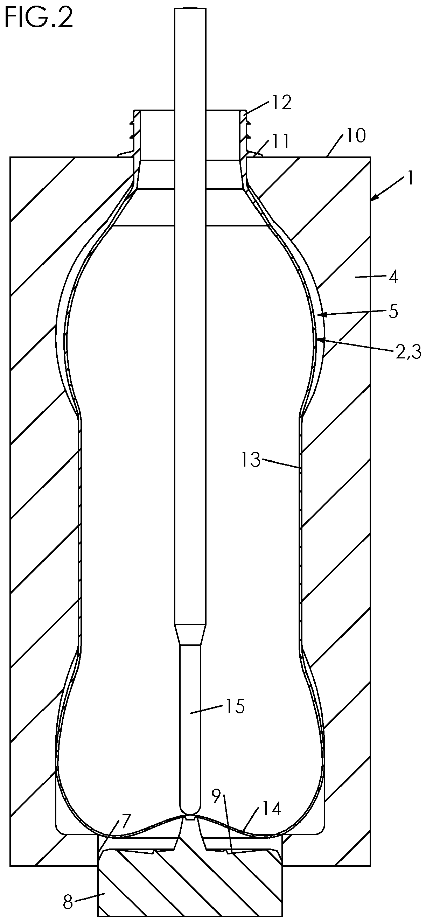

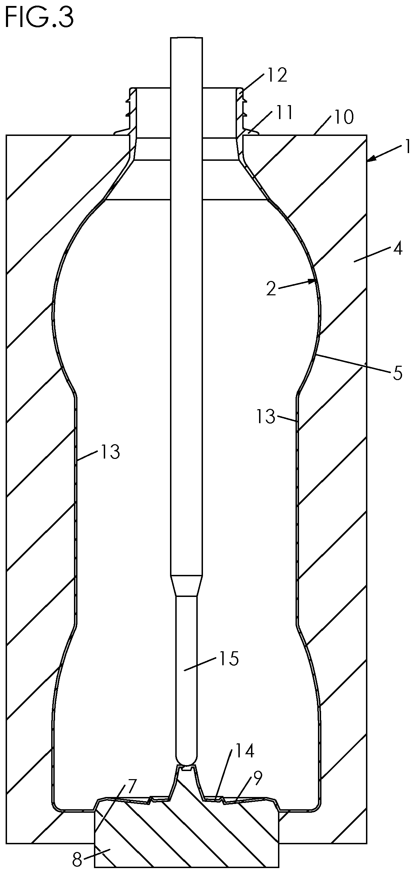

La cavité 5 définit partiellement une empreinte pour le récipient 2. La paroi 4 présente, dans une partie inférieure, une ouverture 7 définissant un passage pour un fond 8 de moule, monté mobile par rapport à la paroi 4 entre une position basse, illustrée sur les figures 1 et 2, dans laquelle le fond 8 de moule est écarté de l'ouverture 7 vers le bas, et une position haute, illustrée sur la figure 3, dans laquelle le fond 8 de moule obture l'ouverture 7. Le fond 8 de moule présente une surface 9 supérieure qui, en position haute du moule 1, ferme la cavité 5, complétant ainsi l'empreinte du récipient 2, contre laquelle est appliquée la matière lors du soufflage. On appelle « course » du fond 8 de moule la distance, notée C, séparant sa position basse de sa position haute.

La préforme 3, puis le récipient 2 formé à partir de celle-ci, reposent sur une face 10 supérieure du moule 1 par l'intermédiaire d'une collerette 11 de la préforme 3, respectivement du récipient 2, qui délimite un col 12 de la préforme 3, respectivement du récipient 2, maintenu hors du moule 1.

Sous la collerette 11, la préforme 3 (puis le récipient 2) présente un corps 13, qui s'étend globalement suivant la direction axiale, et un fond 14, qui est d'abord hémisphérique (figure 1), puis, une fois formé contre le fond 8 de moule (figure 3), s'étend globalement suivant la direction radiale à partir d'une extrémité inférieure du corps 13.

Pour fabriquer le récipient 2 à partir d'une préforme 3, on procède comme suit.

Le moule 1 étant dans sa configuration illustrée sur la figure 1, avec le fond 8 de moule dans sa position basse, on y introduit la préforme 3, préalablement chauffée à une température supérieure à la température de transition vitreuse de la matière (environ 80°C dans le cas du PET).

On introduit alors dans la préforme 3, par le col 12, une tige 15 d'étirage mobile suivant la direction axiale ; dès que la tige 15 atteint le fond 14 de la préforme 3, on initie le présoufflage, en injectant dans la préforme 3 un fluide (notamment de l'air) à une pression de présoufflage (inférieure à 15 bars).

La vitesse d'étirage et le débit d'air sont tels que la tige 15 reste en contact avec le fond 14 de la préforme 3 tout au long du présoufflage.

Lorsque la tige 15 atteint le fond 8 de moule en y plaquant le fond 14 du récipient en formation (figure 2), le fond 8 de moule se trouve toujours dans sa position basse.

La pression de présoufflage n'est pas suffisante pour plaquer la matière intimement contre la paroi 4 du moule 1, et il est nécessaire d'injecter dans le récipient 2 en formation une pression $P_S$ de soufflage, supérieure à la pression de présoufflage (en pratique la pression $P_S$ de soufflage est égale ou supérieure à 15 bars).

Toutefois, initier le soufflage trop tôt peut conduire à un déploiement de la matière par l'ouverture 7, au-delà de la cavité 5, dans l'interstice entre la paroi 4 et le fond 8 de moule, et donc à un pincement de la matière.

C'est pourquoi l'opération de remontée du fond 8 de moule, dénommée boxage, est initiée avec une légère anticipation sur l'opération de soufflage. Plus précisément, l'avance, notée t1, du boxage sur le soufflage, est prédéterminée en étant choisie pour que la matière du fond **14** puisse commencer à se déployer vers le bas, au-delà de la cavité **5,** sans risquer toutefois d'être pincée entre l'ouverture **7** et le fond **8** de moule. La matière bénéficie de la sorte d'un léger surétirage, favorable à l'orientation des molécules (et donc à la rigidité), sans toutefois souffrir d'un pincement entre le fond **8** de moule et la paroi **4** du moule **1.**

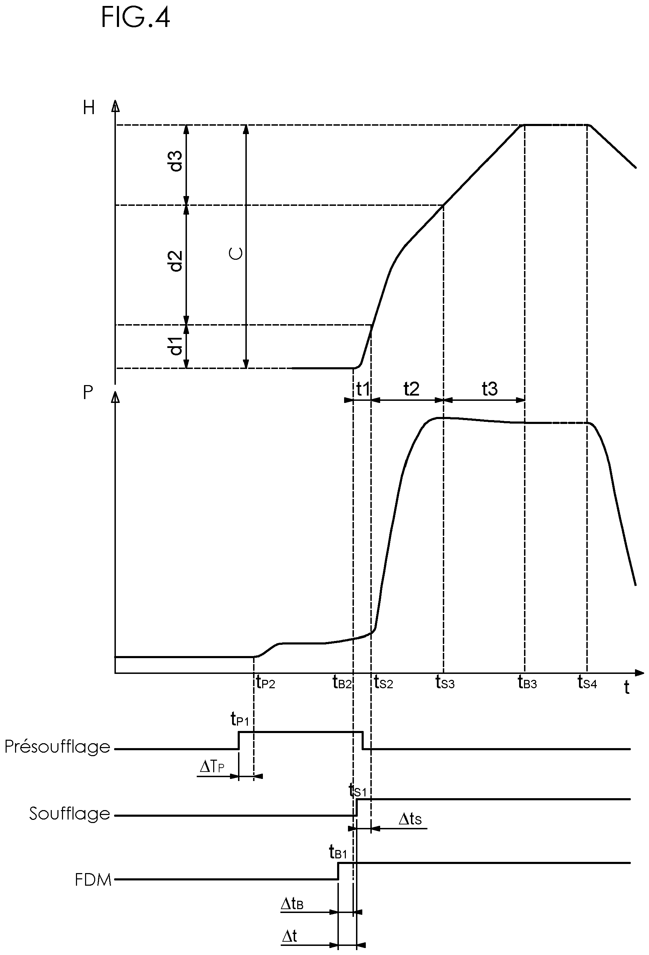

On a représenté sur la figure 4 les courbes représentant, en fonction du temps t :

- en haut, la position axiale (ou hauteur, notée H) du fond **8** de moule ;
- au milieu, la pression P régnant dans le récipient **2** en cours de formage ;
- en bas, les chronogrammes d'électrovannes de commande des opérations de présoufflage, de soufflage et de boxage, c'est-à-dire de déplacement du fond **8** de moule (FDM).

Les courbes sont synchronisées sur l'axe de temps qui leur est commun, les traits pointillés verticaux permettant d'effectuer une mise en correspondance des courbes à certains instants choisis.

La commande d'ouverture de l'électrovanne de présoufflage est donnée à un instant $t_{P1}$ dénommé « top départ présoufflage ». L'électrovanne de présoufflage étant affectée d'un temps de réponse $\Delta T_P$, la pression P régnant dans le récipient **2** subit une montée à un instant $t_{P2}$ tel que $t_{P2} = t_{P1} + \Delta T_P$.

De même, la commande d'ouverture de l'électrovanne de soufflage est donnée à un instant $t_{S1}$ dénommé « top départ soufflage ». L'électrovanne de soufflage étant affectée d'un temps de réponse $\Delta t_S$, la pression P régnant dans le récipient **2** subit une inflexion (croissance subite) à un instant dénommé « départ réel soufflage » $t_{S2}$ tel que $t_{S2} = t_{S1} + \Delta t_S$.

Enfin, la commande d'ouverture de l'électrovanne de boxage est donnée à un instant $t_{B1}$ dénommé « top départ boxage ». L'électrovanne de boxage étant affectée d'un temps de réponse $\Delta t_B$, le déplacement du fond **8** de moule démarre à un instant dénommé « départ réel boxage » $t_{B2}$ tel que $t_{B2} = t_{B1} + \Delta t_B$.

Comme nous l'avons déjà indiqué, et comme cela est visible sur la figure 4, le boxage est initié avant le soufflage : $t_{B2} < t_{S2}$. L'intervalle t1 entre l'instant $t_{B2}$ de départ réel boxage et l'instant $t_{S2}$ de départ réel soufflage, ainsi que la vitesse de déplacement du fond **8** de moule, sont choisis pour que le déplacement correspondant d1 du fond **8** de moule soit, d'une part, suffisamment important pour éviter le pincement de la matière et, d'autre part, suffisamment faible à la fois pour éviter un déchirement de celle-ci et maximiser la course ultérieure du fond de moule lors de la poursuite du soufflage.

En outre, on voit sur la figure 4 que le boxage est initié alors que la pression de présoufflage est sensiblement stabilisée. De la sorte, le début de mouvement du fond **8** de moule sur chaque poste de soufflage débute à volume de bulle sensiblement identique, ce qui permet d'assurer une bonne stabilité des opérations de boxage et de soufflage sur chaque poste.

Il n'est pas suffisant de commander le top départ boxage avant le top départ soufflage (on note $\Delta t$ le décalage entre les tops départs boxage et soufflage : $\Delta t = t_{S1} - t_{B1}$). Il faut en effet tenir compte des temps de réponse des électrovannes de boxage et de soufflage. De fait, l'intervalle t1 se calcule à partir des paramètres prédéterminés et connus $\Delta t$, $\Delta t_B$ et $\Delta t_S$ : $t1 = \Delta t - \Delta t_B + \Delta t_S$.

Les temps de réponse des électrovannes $\Delta t_B$ et $\Delta t_S$ étant des données non réglables mais connues et fixes (à la dérive des temps de réponse près, que l'on peut compenser), il suffit par conséquent de jouer sur $\Delta t$ pour régler t1, toute variation de $\Delta t$ résultant en une variation identique de t1.

On note $t_{S3}$ l'instant où la pression dans le récipient cesse de croître, car ayant atteint son maximum (c'est-à-dire la pression Ps de soufflage), et t2 l'intervalle séparant cet instant $t_{S3}$ de l'instant $t_{S2}$ de départ réel soufflage : $t2 = t_{S3} - t_{S2}$. L'intervalle t2 correspond à la durée de montée en pression du récipient **2** après l'instant $t_{S3}$ de départ réel soufflage.

Le processus de soufflage est classique, la pression $P_S$ de soufflage restant appliquée pendant une durée prédéterminée pour maintenir le récipient **2** en contact prolongé avec la paroi **4** du moule **1** afin de figer et stabiliser la matière. On voit en effet sur la figure 4 que la pression régnant dans le récipient **2** suit un palier de soufflage (c'est-à-dire qu'elle demeure sensiblement constante et égale à la pression de soufflage), après l'instant $t_{S3}$. On note enfin $t_{S4}$ l'instant de fin du soufflage, où débute une phase de dégazage (ou de balayage), lors de laquelle l'application de la pression de soufflage cesse et le récipient **2** est mis à l'air libre.

Comme cela est visible sur la figure 4, à l'instant $t_{S3}$, le boxage n'est pas terminé, le fond **8** de moule n'ayant parcouru qu'une partie de sa course. On note d2 la distance parcourue par le fond **8** de moule pendant l'intervalle t2.

On note $t_{B3}$ l'instant où le fond **8** de moule atteint sa position haute, ayant parcouru toute sa course. Comme cela découle de ce qui précède, et comme cela est illustré sur la figure 4, l'instant $t_{B3}$, qui marque la fin du boxage, est postérieur à l'instant $t_{S3}$, c'est-à-dire que le boxage s'achève après le début du palier de soufflage (en d'autres termes après la fin de la montée en pression du récipient **2** due au soufflage). En d'autres termes, $t_{B3} > t_{S3}$, ou t3 > 0. L'instant $t_{B3}$ de fin de boxage peut concorder avec l'instant $t_{S4}$ de fin de soufflage, mais il est préférable que l'instant $t_{B3}$ ne soit pas postérieur à l'instant $t_{S4}$. Ainsi, pour résumer : $t_{S3} < t_{B3} \leq t_{S4}$.

On note t3 l'intervalle séparant l'instant $t_{S3}$ de début du palier de soufflage et l'instant $t_{B3}$ de fin de boxage : $t3 = t_{B3} - t_{S3}$, et d3 la distance parcourue par le fond **8** de moule pendant l'intervalle t3.

On note enfin $T_B$ la durée totale du boxage, égale à la somme des intervalles t1, t2 et t3 : $T_B$ = t1 + t2 + t3, pendant laquelle le fond **8** de moule a parcouru l'ensemble de sa course C, égale à la somme des déplacements d1, d2 et d3 : C = d1 + d2 + d3.

Nous avons vu (et cela est bien visible sur la figure 4) que le boxage est initié avant le soufflage, et se termine après le début du palier de soufflage, c'est-à-dire que l'intervalle t2 est strictement inclus dans la durée $T_B$, ce que nous avons exprimé par les inégalités suivantes : t1 > 0 et t3 > 0.

En effet, si t1 ≤ 0, on constate un pincement de la matière du fond entre le fond **8** de moule et la paroi **4,** ou à tout le moins des variations de qualité dans la formation des fonds **14,** d'un poste de soufflage à l'autre. Par ailleurs, si t3 ≤ 0, on constate que le fond **14** du récipient **2** est mal formé.

Toutefois, si les conditions t1 > 0 et t3 > 0 sont nécessaires pour obtenir des récipients **2** acceptables d'un point de vue formel et de performance mécanique, des préconisations supplémentaires permettent d'améliorer la forme et les performances mécaniques des récipients **2**. En particulier, les distances d1, d2 et d3 parcourues par le fond **8** de moule pendant le boxage sont des critères importants.

En raison de la diversité des situations rencontrées dans la production industrielle, il n'est pas utile de fournir les donnés numériques précises des tests conduits par les inventeurs pour valider le modèle. En revanche, les inventeurs ont constaté que le respect de plages de valeurs permet de satisfaire les critères de forme et de performances.

On fournit, dans le tableau suivant, des plages préférées pour le choix des paramètres liés au boxage, à savoir t1 et d1 d'une part, t3 et d3 d'autre part, en fonction des paramètres t2, C, $t_{S3}$ et $t_{S4}$, qui sont quant à eux les paramètres liés au soufflage (pression et débit de soufflage, température de chauffe) et sont extrinsèques au boxage :

| Paramètre | mini | maxi |
|-----------|------|------|
| t1/t2 | 0,05 | 0,5 |
| t3 | 0,1·t2 | $t_{S4}$-$t_{S3}$ |
| d1/C | 0,05 | 0,5 |
| d3/C | 0,05 | 0,6 |

Il est à noter que l'on peut maîtriser simultanément les paramètres de déplacement et d'intervalles en jouant sur la vitesse de déplacement du fond **8** de moule, laquelle peut être contrôlée par un variateur (ou restricteur) de débit de la pression alimentant un vérin de déplacement du fond **8** de moule.

Comme cela est par ailleurs visible sur la figure 4, la vitesse de boxage n'est pas nécessairement constante au cours du boxage. En effet, s'il est important d'initier le boxage avant le début du soufflage, il est préférable que le délai d'anticipation (i.e. l'intervalle t1) soit bref, car dans cette phase du cycle la pression dans la préforme reste faible, de sorte que les efforts s'opposant à la remontée du fond **8** de moule sont négligeables et le déplacement de celui-ci peut être est très rapide. A contrario, en maximisant l'intervalle t1 on minimiserait la course effective de boxage lors de laquelle a effectivement lieu la formation du fond **14,** et celui-ci risquerait alors de présenter des défauts.

En revanche, le déplacement du fond **8** de moule lors de la montée en pression (durée t2) est naturellement freiné par l'augmentation de la pression dans la préforme **3** - ce qui revient à maximiser la distance d3. Cela favorise une bonne prise d'empreinte de la matière sur le fond **8** de moule.

Dans l'exemple illustré sur la figure 4, on voit que la courbe de déplacement du fond **8** de moule s'infléchit entre $t_{S2}$ et $t_{S3}$, de sorte qu'en moyenne la vitesse, notée V2, de déplacement du fond **8** de moule pendant la montée en pression est inférieure à la vitesse, notée V1, de déplacement du fond **8** de moule avant l'instant $t_{S2}$ de début réel du soufflage. Cette inflexion de la courbe correspond à l'instant où l'effort résistant qu'oppose la tige **15** à la remontée du fond **8** de moule devient inférieur à l'effort résistant opposé par la pression de soufflage sur la surface **9** supérieure du fond **8** de moule.

On voit par ailleurs que la vitesse est maintenue sensiblement constante après cette inflexion, de sorte qu'en moyenne la vitesse, notée V3, de déplacement du fond **8** de moule sur le palier de soufflage est inférieure à la vitesse V2 de déplacement du fond **8** de moule pendant la montée en pression. Cela améliore encore la prise d'empreinte du fond **14** du récipient **2** sur le fond **8** de moule, car le ralentissement de la remontée du fond **8** de moule, qui se combine à la pression maximale régnant dans le récipient **2,** permet de finaliser la prise d'empreinte de celui-ci. Ainsi, on voit que pour obtenir des récipients **2** bien formés et aux bonnes performances mécaniques, il est préférable de paramétrer le boxage de sorte à satisfaire la double inégalité suivante V1 ≥ V2 ≥ V3.

**Revendications**

1. Procédé de fabrication d'un récipient (**2**) à partir d'une ébauche (**3**) en matière plastique, au sein d'un moule (**1**) muni d'une paroi (**4**) définissant une cavité (**5**) à l'empreinte du récipient (**2**), et d'un fond (**8**) de moule mobile par rapport à la paroi entre une position rétractée, dans laquelle il s'étend en retrait par rapport à la cavité (**5**), et une position déployée dans laquelle il s'étend en saillie vers l'intérieur de la cavité (**5**) pour former dans le récipient (**2**) une réserve en creux, qui comprend :

    - une opération d'introduction de l'ébauche (**3**) dans le moule (**1**);

- une opération de présoufflage, consistant à injecter dans l'ébauche (**3**) un fluide sous pression à une pression dite de présoufflage,

- une opération de soufflage, consécutive à l'opération de présoufflage, consistant, à injecter dans l'ébauche (**3**) un fluide sous pression à une pression dite de soufflage supérieure à la pression de présoufflage ;

- une opération de boxage, initiée avant l'opération de soufflage et consistant à déplacer le fond (**8**) de moule mobile, de sa position rétractée à sa position déployée ;

ce procédé étant **caractérisé en ce que** l'opération de boxage est achevée après la fin d'une montée en pression de l'ébauche (**3**), à l'issue de laquelle la pression dans l'ébauche (**3**) demeure sensiblement égale à la pression de soufflage.

2. Procédé selon la revendication 1, **caractérisé en ce que**, une commande d'ouverture d'une électrovanne de boxage étant donnée à un instant $t_{B1}$ et une commande d'ouverture d'une électrovanne de soufflage étant donnée à un instant $t_{S1}$, l'intervalle $\Delta t$ entre les instants $t_{B1}$ et $t_{S1}$ est choisi pour qu'un intervalle t1 entre un instant de début réel du déplacement du fond (**8**) de moule et un instant réel de début du soufflage soit tel que t1 > 0,
où :

$$t1 = \Delta t - \Delta t_B + \Delta t_S$$

$\Delta t_B$ est le temps de réponse de l'électrovanne de boxage ;
$\Delta t_S$ est le temps de réponse de l'électrovanne de soufflage.

3. Procédé selon la revendication 2, **caractérisé en ce que** l'intervalle t1 est choisi pour que t1/t2 soit compris entre 0,05 et 0,5, où t2 est une durée de montée en pression de l'ébauche (**3**) après le début réel du soufflage, à l'issue de laquelle la pression dans l'ébauche (**3**) demeure sensiblement égale à la pression de soufflage.

4. Procédé selon la revendication 2 ou 3, **caractérisé en ce que** la vitesse de déplacement du fond (**8**) de moule est réglée pendant l'intervalle t1 pour que d1/C soit compris entre 0,05 et 0,5, où d1 est la distance parcourue par le fond (**8**) de moule pendant l'intervalle t1 et C la course du fond (**8**) de moule, séparant sa position basse de sa position haute.

5. Procédé selon la revendication 4, **caractérisé en ce que** l'opération de boxage est achevée après une durée t3 prédéterminée suivant la fin de la montée en pression de l'ébauche (**3**).

6. Procédé selon la revendication 5, **caractérisé en ce que** la vitesse de déplacement du fond (**8**) de moule est réglée pendant l'intervalle t3 pour que d3/C soit compris entre 0,05 et 0,6, où d3 est la distance parcourue par le fond (**8**) de moule pendant l'intervalle t3 et C la course du fond (**8**) de moule, séparant sa position basse de sa position haute.

**Patentansprüche**

1. Verfahren zur Herstellung eines Behälters (2) aus einem Rohling (3) aus Kunststoff im Inneren eines Formwerkzeugs (1), das mit einer Wand (4) versehen ist, die einen Hohlraum (5) mit dem Formabdruck des Behälters (2) definiert, und mit einem Formboden (8), der in Bezug auf die Wand beweglich ist zwischen einer zurückgezogenen Position, in welcher er sich in Bezug auf den Hohlraum (5) zurückversetzt erstreckt, und einer ausgefahrenen Position, in welcher er sich zum Inneren des Hohlraums (5) hin vorstehend erstreckt, um in dem Behälter (2) eine hohle Aussparung auszubilden, welches umfasst:

- einen Arbeitsgang der Einführung des Rohlings (3) in das Formwerkzeug (1);
- einen Arbeitsgang des Vorblasens, der darin besteht, ein Fluid unter Druck mit einem sogenannten Vorblasdruck in den Rohling (3) einzuspritzen;
- einen Arbeitsgang des Blasens, der sich an den Arbeitsgang des Vorblasens anschließt und darin besteht, ein Fluid unter Druck mit einem sogenannten Blasdruck, der höher als der Vorblasdruck ist, in den Rohling (3) einzuspritzen;
- einen Arbeitsgang des "Boxing", der vor dem Arbeitsgang des Blasens eingeleitet wird und darin besteht, den beweglichen Formboden (8) aus seiner zurückgezogenen Position in seine ausgefahrene Position zu verschieben;

wobei dieses Verfahren **dadurch gekennzeichnet ist, dass** der Arbeitsgang des "Boxing" nach dem Ende eines Druckanstiegs des Rohlings (3) abgeschlossen wird, an dessen Enden der Druck im Rohling (3) im Wesentlichen gleich dem Blasdruck bleibt.

2. Verfahren nach Anspruch 1, **dadurch gekennzeichnet, dass**, wenn ein Befehl zum Öffnen eines Boxing-Magnetventils zu einem Zeitpunkt $t_{B1}$ gegeben wird und ein Befehl zum Öffnen eines Blas-Magnetventil zu einem Zeitpunkt $t_{S1}$ gegeben wird, das Intervall $\Delta t$ zwischen den Zeitpunkten $t_{E1}$ und $t_{S1}$ so gewählt wird, dass für ein Intervall t1 zwischen einem Zeitpunkt des tatsächlichen Beginns der Verschiebung des Formbodens (8) und einem tatsächlichen Zeitpunkt des Beginns des Blasens t1 > 0 gilt, wobei:

$$t1 = \Delta t - \Delta t_B + \Delta t_S,$$

$\Delta t_B$ die Reaktionszeit des Boxing-Magnetventils ist,

$\Delta t_S$ die Reaktionszeit des Blas-Magnetventils ist.

3. Verfahren nach Anspruch 2, **dadurch gekennzeichnet, dass** das Intervall t1 so gewählt wird, dass t1/t2 zwischen 0,05 und 0,5 liegt, wobei t2 eine Dauer des Druckanstiegs des Rohlings (3) nach dem tatsächlichen Beginn des Blasens ist, an deren Ende der Druck im Rohling (3) im Wesentlichen gleich dem Blasdruck bleibt.

4. Verfahren nach Anspruch 2 oder 3, **dadurch gekennzeichnet, dass** die Verschiebungsgeschwindigkeit des Formbodens (8) während des Intervalls t1 so geregelt wird, dass d1/C zwischen 0,05 und 0,5 liegt, wobei d1 die Entfernung ist, die von dem Formboden (8) während des Intervalls t1 zurückgelegt wird, und C der Weg des Formbodens (8) ist, der seine niedrige Position von seiner hohen Position trennt.

5. Verfahren nach Anspruch 4, **dadurch gekennzeichnet, dass** der Arbeitsgang des "Boxing" nach einer vorbestimmten Dauer t3 nach dem Ende des Druckanstiegs des Rohlings (3) abgeschlossen wird.

6. Verfahren nach Anspruch 5, **dadurch gekennzeichnet, dass** die Verschiebungsgeschwindigkeit des Formbodens (8) während des Intervalls t3 so geregelt wird, dass d3/C zwischen 0,05 und 0,6 liegt, wobei d3 die Entfernung ist, die von dem Formboden (8) während des Intervalls t3 zurückgelegt wird, und C der Weg des Formbodens (8) ist, der seine niedrige Position von seiner hohen Position trennt.

**Claims**

1. Method for manufacturing a container (2) from an unfinished form (3) made of plastics material, in a mould (1) provided with a wall (4) defining a cavity (5) that has the impression of the container (2), and with a mould bottom (8) able to move with respect to the wall between a retracted position in which it extends set back from the cavity (5), and a deployed position in which it extends as a projection towards the inside of the cavity (5) in order to form in the container (2) a recessed reservation, which comprises:

   - an operation of introducing the unfinished form (3) into the mould (1);
   - a pre-blowing operation which consists in injecting a pressurized fluid into the unfinished form (3) at a pressure known as the pre-blowing pressure,
   - a blowing operation, that follows the pre-blowing operation, consisting in injecting into the unfinished form (3) a pressurized fluid at a pressure known as the blow-moulding pressure which is higher than the pre-blowing pressure;
   - a boxing operation, initiated before the blowing operation and which consists in moving the mobile mould bottom (8) from its retracted position into its deployed position;

   this method being **characterized in that** the boxing operation is completed after the end of an increase in pressure of the unfinished form (3), at the end of which the pressure in the unfinished form (3) remains substantially equal to the blow-moulding pressure.

2. Method according to Claim 1, **characterized in that**, with a command to open an electrically-operated boxing valve being given at an instant $t_{B1}$ and with a command to open an electrically-operated blow-moulding valve being given at an instant $t_{S1}$, the interval $\Delta t$ between an instants $t_{B1}$ and $t_{S1}$ is chosen so that an interval t1 between an instant marking the true start of the movement of the mould bottom (8) and a true instant marking the start of blowing is such that t1 > 0, where:

$$t1 = \Delta t - \Delta t_B + \Delta t_S$$

   $\Delta t_B$ is the response time of the electrically-operated boxing valve;
   $\Delta t_S$ is the response time of the electrically-operated blow-moulding valve.

3. Method according to Claim 2, **characterized in that** the interval t1 is chosen so that t1/t2 is comprised between 0.05 and 0.5, where t2 is a time taken for the pressure in the unfinished form (3) to rise after the true start of blowing, at the end of which the pressure in the unfinished form (3) remains substantially equal to the blow-moulding pressure.

4. Method according to Claim 2 or 3, **characterized in that** the speed at which the mould bottom (8) moves is regulated during the interval t1 so that d1/C is comprised between 0.05 and 0.5, where d1 is the distance covered by the mould bottom (8) during the interval t1, and C is the travel of the mould bottom (8), separating its lowered position from its raised position.

5. Method according to Claim 4, **characterized in that** the boxing operation is completed after a predetermined duration t3 following the end of the increase in pressure in the unfinished form (3).

6. Method according to Claim 5, **characterized in that** the speed at which the mould bottom (8) moves is regulated during the interval t3 so that d3/C is comprised between 0.05 and 0.6, where d3 is the distance covered by the mould bottom (8) during the interval t3, and C is the travel of the mould bottom (8), separating its lowered position from its raised position.

FIG.1

FIG.2

FIG.3

FIG.4

## RÉFÉRENCES CITÉES DANS LA DESCRIPTION

**Documents brevets cités dans la description**

- EP 1922256 A
- US 2009139996 A, Sidel
- US 5785921 A, Sidel
- EP 2173637 A, Sidel
- WO 9952701 A1